**Europäisches Patentamt**

(19) **European Patent Office**

**Office européen des brevets**

(11) Veröffentlichungsnummer: **0 138 745**
**B1**

(12) **EUROPÄISCHE PATENTSCHRIFT**

(45) Veröffentlichungstag der Patentschrift:
22.07.87

(21) Anmeldenummer: **84730104.1**

(22) Anmeldetag: **02.10.84**

(51) Int. Cl.⁴: **B 65 G 23/06**

(54) **Antriebswelle für einen Lattenförderer.**

(30) Priorität: **07.10.83 DE 3336969**

(43) Veröffentlichungstag der Anmeldung:
**24.04.85 Patentblatt 85/17**

(45) Bekanntmachung des Hinweises auf die Patenterteilung:
**22.07.87 Patentblatt 87/30**

(84) Benannte Vertragsstaaten:
**DE FR GB IT**

(56) Entgegenhaltungen:
**FR-A-2 147 859**
**GB-A-587 037**
**US-A-3 118 316**
**US-A-3 257 860**
**US-A-3 504 562**

(73) Patentinhaber: **Hastem- Müller, Hugo Stefan,**
**Oettinger Strasse 9, D-8860 Nördlingen (DE)**

(72) Erfinder: **Hastem- Müller, Hugo Stefan, Oettinger**
**Strasse 9, D-8860 Nördlingen (DE)**

(74) Vertreter: **Eikenberg & Brümmerstedt**
**Patentanwälte, Schackstrasse 1, D-3000 Hannover**
**1 (DE)**

0 138 745  2

## Beschreibung

Die Erfindung betrifft eine Antriebswelle für einen Lattenförderer, der ein über die Antriebswelle und wenigstens eine weitere Welle geführtes Lattenförderband enthält, bei dem die Latten, auf denen das Fördergut transportiert wird, auf endlosen, in Förderrichtung mit Abstand nebeneinander angeordneten Bändern befestigt sind, auf deren Unterseite quer zur Förderrichtung verlaufende Zähne vorgesehen sind, die mit dazu passenden Nuten in wenigstens der antreibenden Welle in Eingriff sind.

Derartige Lattenförderer werden in großem Umfang in der Textilindustrie bei der Herstellung von Faservliesen zum Transport der Fasern eingesetzt, finden darüber hinaus aber auf praktisch allen Gebieten der Fördertechnik Anwendung, beispielsweise im Postwesen zum Transport von Paketen oder in industriellen Maschinen und Anlagen.

Die Bänder, die als Träger für die Latten dienen, bestehen aus Leder oder Kunststoff und sind einige cm breit, wobei je nach der Breite des Förderbandes mehrere, wenigstens aber zwei Bänder mit Abstand nebeneinander angeordnet sind, auf denen die Latten befestigt sind.

Je nach Länge des Förderbandes läuft dieses über zwei oder mehr Wellen, von denen wenigstens eine motorisch angetrieben wird.

Es sind Lattenförderer bekannt, bei denen die Kraftübertragung durch die Haftreibung der Bänder auf der glatten Oberfläche der antreibenden Welle erzielt wird.

Insbesondere in der Textilindustrie finden häufig Lattenförderer Verwendung, bei denen das Förderband im Vergleich zu seiner Länge außerdentlich breit ist. Breiten von 10 bis 15 m sind dabei nicht ungewöhnlich.

Diese breiten Lattenförderbänder neigen stets dazu, beim Antrieb durch eine glatte Antriebswelle während des Betriebes schief zu laufen. Infolgedessen treten an den Latten Scher- und Biegekräfte auf, die häufig zu Schäden führen. Entweder führt dann das Schieflaufen dazu, daß sich einzelne Latten von den Bändern lösen, oder es kommt zum Bruch von einzelnen Latten, wenn die Befestigung der Latten auf den Bändern sehr haltbar ist. In beiden Fällen erzwingen die auftretenden Schäden einen Stillstand des Förderers und eventuell angeschlossener, von der Förderleistung abhängiger Maschinen.

Aus der DE-OS 2 323 601 ist es bekannt, auf der Unterseite der die Latten tragenden Bänder Zähne anzubringen, die mit dazu passenden Nuten in wenigstens der angetriebenen Welle in Eingriff sind, so daß damit der Antrieb nach Art eines Zahnriemens erfolgt, wodurch alle Probleme hinsichtlich des Schieflaufens beseitigt sind.

Ein solches, auf der Unterseite der Bänder mit Zähnen versehenes Lattenförderband erfordert eine entsprechende Ausbildung der Antriebswelle, die zumindest im Bereich der Bänder mit an die Zähne angepaßten Nuten versehen werden muß. Dadurch ergeben sich sowohl bei einem von vornherein auf die mit Zähnen versehenen Bänder ausgelegten Förderer als auch bei einer Umrüstung eines mit glatter Antriebswelle versehenen Förderers auf ein solches mit Zähnen versehenes Lattenförderband beträchtliche Kosten für die Herstellung der Antriebswelle, die umso größer sind, je breiter der Lattenförderer ausgebildet ist. Beispielsweise ist es bisher üblich, bei einer Umrüstung die rohrförmige Antriebswelle durch eine dünnere Welle zu ersetzen, auf der im Bereich der Bänder mit Nuten versehene Räder aus gepreßtem Hartgewebe befestigt werden, und wenn man berücksichtigt, daß beispielsweise bei einem Lattenförderband mit einer Breite von 20 m etwa 60 Rollen auf der Antriebswelle vorgesehen werden müssen, addieren sich die gesamten Umrüstungskisten auf eine beträchtliche Höhe.

Der Erfindung liegt die Aufgabe zugrunde, eine Antriebswelle für einen Lattenförderer der eingangs genannten Art zu schaffen, die sowohl als Erstausrüstung in einem neuen Förderer als auch als umgerüstete Welle in einem Förderer, der von einem Lattenförderband ohne Zähne auf ein solches mit Zähnen umgestellt wird, preiswert herstellbar ist.

Die gestellte Aufgabe wird gemäß der Erfindung dadurch gelöst, daß die Nuten in auf der Antriebswelle zumindest im Bereich der Trägerbänder angeordneten Stahlblechringen angeordnet sind, die mäanderförmig entsprechend der Teilung der Zähne geprägt sind, und daß zwischen den den Nuten benachbarten Vorsprüngen der Stahlblechringe und der vorzugsweise glatten Oberfläche der Welle Formkörper aus einem Elastomer angeordnet sind, die sich unter Vorspannung auf der Oberfläche der Welle abstützen.

Dabei sind die Formkörper vorzugsweise zumindest auf ihrer dem Stahlblechring zugekehrten Seite selbstklebend ausgebildet. Hierdurch können die Formkörper in dem Stahlblechring befestigt werden, bevor dieser auf die Welle aufgebracht wird.

Als Ausgangsmaterial für den Stahlblechring dient dabei Bandstahl, von dem nach der Prägung Abschnitte mit der zur Bildung des Ringes erforderlichen Länge abtrennbar sind.

Um den Stahlblechring auf die glatte Oberfläche der Antriebswelle aufzubringen, wird der geprägte Bandstahlabschnitt nach Einfügung der Formkörper locker so um die Welle gelegt, daß zwei Vorsprünge etwa aneinandergrenzen, und anschließend wird der Bandstahlabschnitt an den einander zugekehrten Kanten der Vorsprünge durchtrennt, worauf die Enden der Vorsprünge etwa in ihrer Mitte um 180° einwärts gebogen werden, und anschließend werden die Enden des Bandstahlabschnittes unter Krafteinwirkung gegeneinanderbewegt, bis die beiden abgelegenen Seiten der Vorsprünge unter Kompression der Formkörper aneinanderstoßen

2

und gemeinsam wieder die Länge eines Vorsprungs bilden, worauf dann eine die abgebogenen Enden umgreifende Klammer in Achsrichtung des Stahlblechringes eingeschoben wird.

Auf diese Weise läßt sich die Antriebswelle sehr preisgünstig herstellen, und auch eine Umrüstung einer Antriebswelle mit glatter Oberfläche ist möglich, ohne daß die vorhandene Welle ersetzt werden muß.

Ein weiterer Vorteil der Erfindung besteht darin, daß durch die Verwendung der elastomeren Formkörper Stahlblechringe gleichen Durchmessers auf Wellen angebracht werden können, deren Außendurchmesser zum Nenndurchmesser geringe Abweichungen aufweist.

Die Erfindung wird nachfolgend anhand der Zeichnung näher erläutert. In der Zeichnung zeigen:

Fig. 1 schematisch die Führung eines Lattenförderbandes über mehrere Wellen;

Fig. 2 die Ansicht eines Lattenförderbandes schräg von unten,

Fig. 3 eine Querschnittsdarstellung der erfindungsgemäß ausgebildeten Antriebswelle und

Fig. 4 a und b die Enden des Stahlblechringes zur Veranschaulichung ihrer Verbindung.

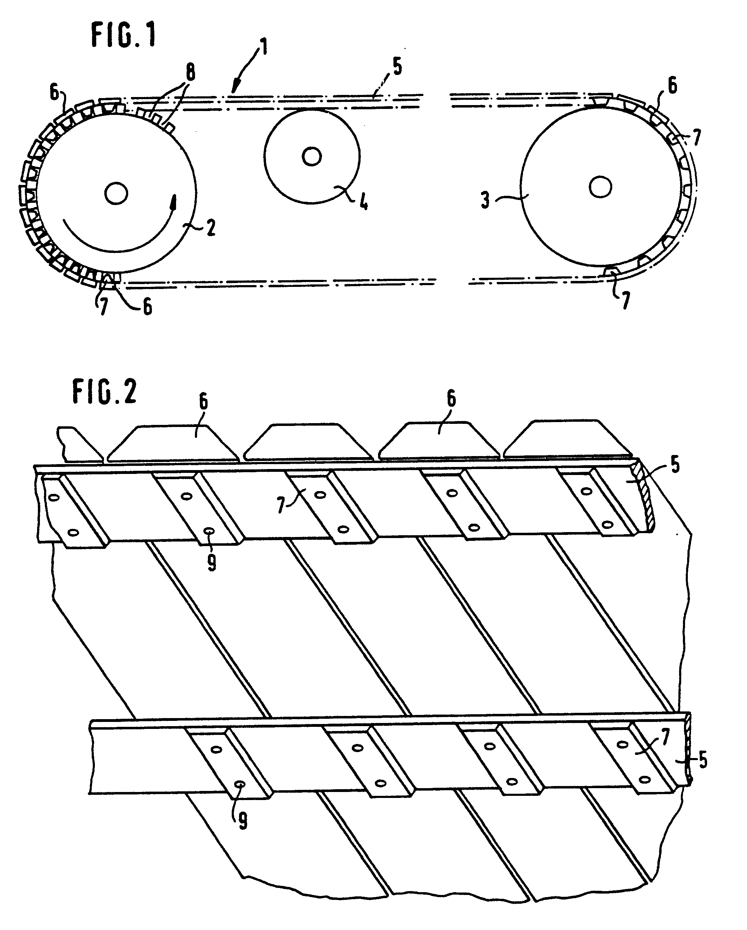

Fig. 1 zeigt einen Lattenförderer, bestehend aus einem Lattenförderband 1, zwei Endwellen 2 und 3, von denen die mit 2 bezeichnete Welle in Pfeilrichtung motorisch angetrieben ist, sowie eine weitere Stützwelle 4 zwischen den beiden Endwellen. Das Lattenförderband 1 besteht aus einer Reihe von nebeneinander mit Abstand angeordneten Trägerbändern, von denen eines, welches mit 5 bezeichnet ist, dargestellt ist. Auf den Trägerbändern sind auf der Oberseite Latten 6 und auf der Unterseite Zähne 7 befestigt. Die Zähne besitzen einen flachen Querschnitt und sind schmaler als die Latten 6, unter denen sie mittig angeordnet sind. Im Bereich der Bänder 5 ist die angetriebene Endwelle 2 mit Nuten 8 versehen, deren Gestalt und Folge den Zähnen entspricht, so daß beide in einen formschlüssigen Eingriff gelangen. Hierdurch wird das Lattenförderband auf seiner Breite zwangsweise angetrieben und geführt und kann dadurch nicht schief laufen. Die Endwelle 3 und die Stützwelle 4 können mitlaufende-Wellen sein, sie können aber auch feststehen, so daß die Zähne 7 über die Oberflächen dieser Wellen hinweggleiten. Dies ist ohne Schwierigkeiten möglich, wenn die Zähne aus einem Werkstoff wie Polyamid bestehen, das hervorragende Gleiteigenschaften aufweist.

Aus Fig. 2 ist der Aufbau eines Lattenförderbandes ersichtlich. Es sind zwei Trägerbänder 5 dargestellt, an deren Unterseite in gleichen Abständen die Zähne 7 beispielsweise mittels Nieten 9 befestigt sind. Auf der anderen Seite können die Nieten in bekannter Weise so ausgebildet sein, daß die Latten 6 aufgerastet werden können.

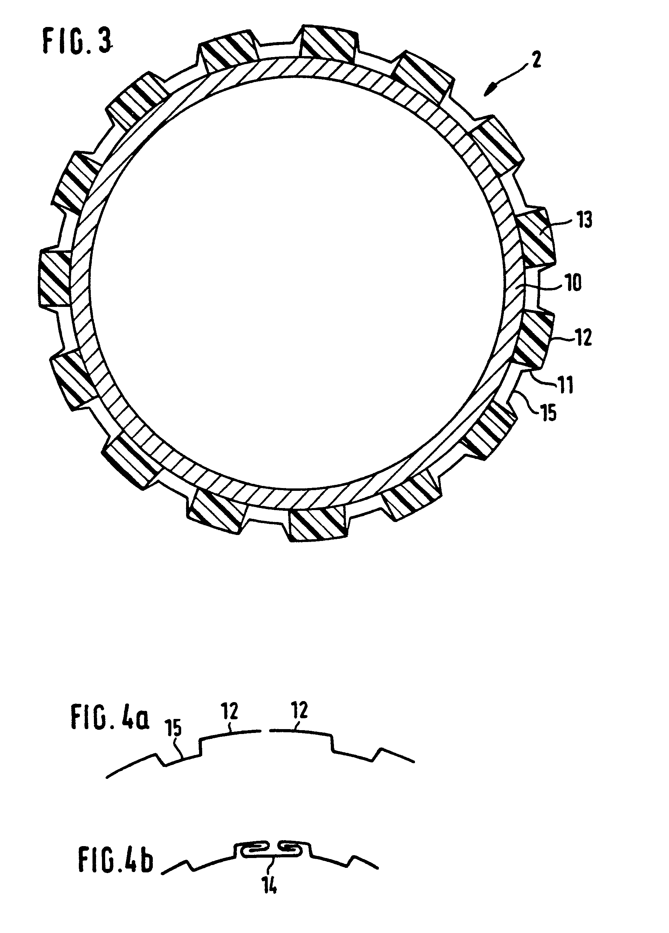

Gemäß Fig. 3 besteht die Antriebswelle 2 aus einem Stahlring 10 mit glatter Oberfläche, der von einem mäanderförmig entsprechend der Teilung der Zähne 7 geprägten Stahlblechring 11 umgeben ist. Zwischen den Vorsprüngen 12 des Stahlblechringes 11 und der rohrförmigen Welle 10 sind jeweils Formkörper 13 aus einem elastomeren Material angeordnet, die den Stahlblechring 11 im Abstand von der Oberfläche der rohrförmigen Welle 10 halten und den Stahlblechring zugleich auf der Welle 10 zentrieren. Der Stahlblechring 11 liegt unter Spannung an den Formkörpern 13 an, so daß diese zusammengepreßt werden und zwischen ihnen und der Oberfläche der Stahlrohrwelle 10 so viel Reibung entsteht, daß der Stahlblechring 11 bei den auf das Lattenförderband zu übertragenden Antriebskräften nicht rutscht. Die Reibung kann durch Aufrauhen oder Riffeln der Oberfläche der Stahlrohrwelle 10 und durch Wahl des Materials für die Formkörper 13 erhöht werden. Gegebenenfalls kann der Stahlblechring 11 auch an einigen Stellen mit der rohrförmigen Welle 10 verschraubt werden. Es können auch die Formkörper 13 mit der Welle 10 verklebt werden. Vorzugsweise sind in den Nuten 15 des Stahlblechringes 11 mehrere nicht dargestellte Sicken angebracht, die einen Abstand voneinander aufweisen, in Umfangsrichtung verlaufen und nach innen weisen. Hierdurch kann die Stabilität des Stahlblechringes erheblich erhöht werden.

In der Praxis hat sich gezeigt, daß für den Stahlblechring eine Wandstärke von etwa 0,6 mm ausreicht, so daß sich eine leichte Verarbeitbarkeit ergibt.

Die Anbringung des Stahlblechringes 11 ist aus Fig. 4 ersichtlich. Der Stahlblechring 11 wird aus Bandstahl hergestellt und in einem Folgeverfahren in seine Form geprägt, wobei das Band nach dem Prägen zu Vorratsrollen aufgewickelt werden kann. Von einer solchen Vorratsrolle wird dann ein Abschnitt abgetrennt, der um die Welle 10 paßt, nachdem zuvor die Formkörper 13 angebracht worden sind. Die Formkörper 13 werden vorzugsweise an ihrer dem Stahlblechring zugekehrten Seite selbstklebend ausgebildet, so daß sie ohne Schwierigkeiten angebracht werden können. Falls eine spätere Verklebung auch mit der Welle 10 erwünscht ist, kann auch die der Welle 10 zugekehrte Seite der Formkörper 13 selbstklebend ausgebildet werden.

Anschließend wird der Bandstahlabschnitt locker so um die Welle 10 gelegt, daß zwei Vorsprünge 12 etwa aneinandergrenzen, worauf an den einander zugekehrten Kanten der Vorsprünge eine Durchtrennung erfolgt. Diesen Zustand zeigt Fig. 4a. Nun werden die freien Enden der Vorsprünge 12 gemäß Fig. 4b etwa in ihrer Mitte um 180° einwärts gebogen, so daß die verbleibenden Teile beider Vorsprünge in Umfangsrichtung wieder die Länge eines Vorsprungs besitzen. Nach dem Umbiegen der freien Enden der Vorsprünge 12 klaffen diese natürlich auseinander. Durch eine geeignete Vorrichtung werden dann die Enden der umgebogenen Vorsprünge gegeneinander bewegt, wodurch die Formkörper 13 etwas zusammengepreßt werden und ihre Vorspannung erhalten, und anschließend wird eine die abgebogenen Enden der Vorsprünge umgreifende Klammer 14 in Achsrichtung des Stahlblechringes 11 eingeschoben, so daß dieser geschlossen wird.

Die erfindungsgemäß ausgebildete Antriebswelle kann als Erstausrüstung für einen Lattenförderer verwendet werden, wobei es möglich ist, einen einzigen Stahlblechring 11 zu verwenden, der über die ganze Länge der Welle 10 verläuft, jedoch ist es bei breiten Lattenförderbändern und entsprechend vielen Trägerbändern 7 zweckmäßig, mehrere Stahlblechringe an den Stellen vorzusehen, wo sich die Trägerbänder befinden, wobei dann die Breite der Stahlblechringe etwa der Breite der Trägerbänder entspricht.

Es ist aber auch möglich, auf einfache Weise einen vorhandenen Lattenförderer für den Einsatz eines mit Zähnen versehenen Lattenförderbandes umzurüsten. Dies kann an Ort und Stelle ohne Ausbau der vorhandenen Antriebswelle erfolgen, und der Benutzer kann diese Umrüstung sogar selbst vornehmen, da er hierfür nur die geprägten Stahlblechabschnitte zu beziehen braucht, die ihm zum Durchmesser der Antriebswelle seiner Maschine passend und an den Enden bereits umgebogen angeliefert werden können. Der durch die Umrüstung vergrößerte Durchmesser der Welle ist nur gering und kann erforderlichenfalls durch Einstellung der Antriebsgeschwindigkeit berücksichtigt werden.

**Patentansprüche**

1. Antriebswelle (2) für einen Lattenförderer, der ein über die Antriebswelle und wenigstens eine weitere Welle (3) geführtes Lattenförderband (1) enthält, bei dem die Latten (6), auf denen das Fördergut transportiert wird, auf endlosen, in Förderrichtung mit Abstand nebeneinander angeordneten Trägerbändern (5) befestigt sind, auf deren Unterseite quer zur Förderrichtung verlaufende Zähne (7) vorgesehen sind, die mit dazu passenden Nuten in wenigstens der Antriebswelle (2) in Eingriff sind, dadurch gekennzeichnet, daß die Nuten (15) in auf der Antriebswelle (2) zumindest im Bereich der Trägerbänder (5) angeordneten Stahlblechringen (11) angebracht sind, die mäanderförmig entsprechend der Teilung und Form der Zähne (7) geprägt sind, und daß zwischen den den Nuten (15) benachbarten Vorsprüngen (12) der Stahlblechringe (11) und der vorzugsweise glatten Oberfläche der Welle (2) Formkörper (13) aus einem Elastomer angeordnet sind, die sich unter Vorspannung auf der Oberfläche der Welle (2) abstützen.

2. Antriebswelle nach Anspruch 1, dadurch gekennzeichnet, daß die Formkörper (12) zumindest auf ihrer dem Stahlblechring (11) zugekehrten Seite selbstklebend ausgebildet sind.

3. Antriebswelle nach Anspruch 2, dadurch gekennzeichnet, daß als Ausgangsmaterial für den Stahlblechring (11) Bandstahl dient, von dem nach der Prägung Abschnitte mit der zur Bildung des Ringes erforderlichen Länge abtrennbar sind.

4. Antriebswelle nach Anspruch 3, dadurch gekennzeichnet, daß in den Nuten (15) des Stahlblechringes (11) mehrere einen Abstand voneinander aufweisende, in Umfangsrichtung verlaufende, einwärts gerichtete Sicken angebracht sind.

5. Verfahren zum Aufbringen des Stahlblechrings auf die Antriebswelle eines Lattenförderers nach einem der vorhergehenden Ansprüche, dadurch gekennzeichnet, daß der geprägte Bandstahlabschnitt unter Einfügung der Formkörper (13) locker so um die glatte Oberfläche der Welle (2) gelegt wird, daß zwei Vorsprünge (12) etwa aneinandergrenzen, daß anschließend der Bandstahlabschnitt an den einander zugekehrten Kanten der Vorsprünge (12) durchtrennt wird, daß dann die Enden der Vorsprünge (12) etwa in ihrer Mitte um 180° einwärts gebogen werden, worauf die Enden des Bandabschnittes unter Krafteinwirkung gegeneinanderbewegt werden, bis die beiden abgebogenen Teile der Vorsprünge unter Kompression der Formkörper (13) aneinanderstoßen und gemeinsam wieder die Länge eines Vorsprungs bilden, und daß dann eine die abgebogenen Enden umgreifende Klammer (14) in Achsrichtung des Stahlblechringes (11) eingeschoben wird.

**Claims**

1. Drive shaft (2) for a slat conveyor having a slat conveyor belt running over the drive shaft (2) and at least one additional shaft (3), in which the slats (6) on which the goods are conveyed are fastened to endless carrier belts (5) spaced apart side-by-side in the direction of conveyance, said carrier belts being equipped on their underside with teeth (7) extending transversely to the direction of conveyance and engaging corresponding grooves in at least the drive shaft (2), characterized in that the grooves (15) are provided in sheet steel rings (11) mounted on said drive shaft (2) at least in the area of the carrier belts (5), said sheet steel rings being stamped meanderwise corresponding to the pitch and shape of said teeth (7) and that between the projections (12) defined by adjacent grooves (15) of said sheet steel rings (11) and the preferrably smooth surface of said shaft (2) shaped elements (13) of an elastomer are mounted, which are supported under pre-load on the surface of said shaft (2).

2. Drive shaft according to claim 1, characterized in that the shaped elements (12) are self-adhesive at least on the side facing the sheet steel ring (11).

3. Drive shaft according to claim 2, characterized in that the original material for the sheet steel ring (11) is strip steel from which, after stamping, sections can be cut off of the length required to form said ring.

4. Drive shaft according to claim 3, characterized in that in the grooves (15) of said sheet steel ring (11) several corrugations are provided, turned inward, extending in a peripheral direction and spaced apart.

5. A method for mounting of the sheet steel ring on the drive shaft of a slat conveyor according to one of the preceding claims, characterized in that the stamped sheet steel section under insertion of said shaped elements. (13) is loosely laid around the smooth surface of said shaft (2) in such a way that two projections (12) are substantially adjacent to each other, that thereafter the sheet steel section is cut through at the edges of the projections (12) facing to each other, that then the ends of the projections (12) essentially in their center are bent inwardly by 180°, whereafter the ends of the band section are forced towards each other, until the two band portions of said projections are abutting under compression of said shaped elements (13) and together again form the length of a projection, and that then a clip (14) is inserted in axial direction of the sheet steel ring (11) so that it wraps around the bent ends.

**Revendications**

1. Tambour d'entraînement pour un convoyeur à lattes, comprenant une bande de transport à lattes (1) conduite sur le tambour d'entraînement (2) et au moins un tambour ultérieur (3), les lattes (6) sur lesquelles les matières à transporter sont convoyées étant fixées avec espace l'une à côté de l'autre sur des bandes de support (5) sans fin en direction de transport, sur la face inférieure desquelles il y a des dents (7) courant transversalement au sens du transport qui sont en engagement avec des rainures correspondantes dans au moins le tambour d'entraînement (2), charactérisé en ce que les rainures (5) sont installées dans des couronnes en fer feuilleté (11) sur le tambour d'entraînement (2) au moins dans la zone des bandes de transport (5), les dites couronnes étant cambrées en forme de méandres correspondante aux pas et à la forme des dents (7), et en ce qu'entre les saillies (12) adjacentes aux rainures (15) des couronnes en fer feuilleté (11) et la surface de préférence lisse du tambour d'entraînement (2) il y a des corps profilés (13) d'un élastomer s'appuyant sur la surface du tambour (2) sous précontrainte.

2. Tambour d'entraînement selon la revendication 1, charactérisé en ce que les corps profilés (13) sont développés de manière autocollante au moins sur leur côté adjacente à la couronne en fer feuilleté.

3. Tambour d'entraînement selon la revendication 2, charactérisé en ce qu'on se sert d'acier feuillard comme matière première pour la couronne en fer feuilleté (11) dont des morceaux détachés sont séparables après le cambrage avec la longueur nécessaire pour la formation de la couronne.

4. Tambour d'entraînement selon la revendication 3, charactérisé en ce que dans les rainures (15) de la couronne en fer feuilleté (11) il y a plusieurs moulures incurbées ayant une certaine distance l'une de l'autre et courant en sens de la circonférence.

5. Procédé pour l'attachage de la couronne en fer feuilleté sur le tambour d'entraînement d'un convoyeur à lattes selon une des revendications précédentes, caractérisé en ce que le morceau détaché d'acier feuillard cambré est placé légèrement autour de la surface lisse du tambour (2) sous insertion des corps profilés (13) ainsi que deux saillies (12) s'avoisinent à peu près, en ce qu'ensuite le morceau détaché d'acier feuillard est coupé aux arêtes adjacentes des saillies (12), en ce qu'après cela les pointes des saillies (12) sont recourbées vers l'intérieur à 180° à peu près dans leur centre après quoi les pointes du morceau détaché de bande sont mis en mouvement l'une envers l'autre sous dépense d'énergie jusqu'à ce que les deux parties courbées des saillies se touchent sous compression des corps profilés (13) ainsi formant ensemble de nouveau la longueur d'une saillie, et en ce qu'alors un bride de fixation (14) enveloppant les pointes courbées est intercalée en sens de la direction de l'axe de la couronne en fer feuilleté (11).

FIG.1

FIG.2

FIG. 3

FIG. 4a

FIG. 4b